# EUROPÄISCHE PATENTSCHRIFT

(11) **EP 2 826 625 B1**
(45) Veröffentlichungstag und Bekanntmachung des Hinweises auf die Patenterteilung: **27.04.2016**
(21) Anmeldenummer: 14171450.1
(22) Anmeldetag: 06.06.2014
(51) Int. Cl.: B41F 33/00, B41F 33/10, G01J 3/46, H04N 1/60

(54) **Speziell gerastertes Graumessfeld**
Specially screened grey measuring field
Champ de mesure grise spécialement cranté

(30) Priorität: 01.07.2013 DE 102013010970
(43) Veröffentlichungstag der Anmeldung: 21.01.2015
(73) Patentinhaber: Heidelberger Druckmaschinen AG, 69115 Heidelberg (DE)
(72) Erfinder: Gembe, Andreas, 69181 Leimen-Gauangelloch (DE)

(56) Entgegenhaltungen:
- DE-A1- 10 201 918
- DE-A1-102004 058 801

## Beschreibung

Die vorliegende Erfindung betrifft ein Verfahren zur Regelung der Farbdosierung in einer Druckmaschine mit einem Rechner zum Vergleich von Farbmesswerten, welche auf einem Druckkontrollstreifen erfasst werden, mit Farbsollwerten und zur Steuerung der Farbdosierung in den Farbwerken der Druckmaschine.
Weiterhin betrifft die Erfindung einen Bedruckstoff, eine Druckplatte und eine Vorrichtung zur Erzeugung von einem Druckbild und einen Druckkontrollstreifen umfassenden gerasterten Bilddaten, welche in einer Druckmaschine auf einen Bedruckstoff aufgebracht werden.

Das Ziel eines Druckprozesses liegt darin die zu Grunde liegende Druckvorlage so originalgetreu und farblich genau wie möglich wiederzugeben. Um dies zu gewährleisten, werden auf den fertiggestellten Bedruckstoffen regelmäßig Proben genommen und mit der Druckvorlage verglichen. Dies kann unter anderem in der Form geschehen, dass die Druckvorlage in Form von digitalen Daten mit digitalen Messwerten der bedruckten Bedruckstoffe abgeglichen wird. Weichen die vom Bedruckstoff ermittelten Ist-Werte von den Soll-Werten über eine zulässige Toleranz hin ab, müssen die Einstellungen der Druckmaschine in entsprechender Weise geändert werden, um eine optimale Wiedergabe der Druckvorlage zu erreichen. Die entscheidende Variable, die beim Offsetdruck angepasst werden muss, ist die Farbschichtdichte. So lassen sich Farbunterschiede zwischen Druckvorlage und bedruckten Bedruckstoffen durch Änderungen der Farbdosierung beheben.

Ein solches Verfahren zum Steuern und Regeln der Farbgebung in einer Druckmaschine ist aus der EP 0 741 028 A2 bekannt. Die Farbdosierelemente in den Farbwerken werden mittels einer Steuer- und Regelvorrichtung eingestellt, welche von einer Bildaufnahmeeinrichtung laufend Bildsignale produzierter Bedruckstoffe empfängt. Zur Berechnung der Einstellung für die Farbdosierung verfügt die Steuer- und Regelvorrichtung über die Möglichkeit, mehrere Steuer- und Regelalgorithmen zu benutzen und den passenden jeweils in Abhängigkeit von vorgebbaren Parametern automatisch auszuwählen und zu verwenden. Dadurch lässt sich die Steuer- und Regelungsvorrichtung an die jeweils vorliegenden Umstände anpassen, um so für jeden Druckauftrag die optimale Farbgebung einzustellen. Dieses Verfahren hat jedoch den Nachteil, dass es in sich abgeschlossen ist, so dass weitere Einflussgrößen nicht ohne weiteres in das Verfahren zum Steuern und Regeln der Farbgebung eingebunden werden können.

Weiterhin ist aus DE 10 2008 045 661 A1 ein Verfahren bekannt, das auch andere Einflüsse einbezieht, außer jene, welche durch die in EP 0 741028 A2 genannten Algorithmen ausgeglichen werden können. An Hand einer Plausibilitätsprüfung soll hierbei verhindert werden, dass es durch sekundäre Effekte, die zu Färbungsabweichungen in Graumessfeldern führen, wie z.B. Schieben oder Dublieren, zu fehlgeleiteten Farbregelungen kommt. Dieses Verfahren hat jedoch den Nachteil, dass Passerabweichungen nichtsdestotrotz zu veränderten Farbwiedergaben bei Graumessfeldern führen. Weiterhin können etwaige Fehlregelungen auch nicht abschließend durch eine reine Prüfung der Plausibilität einer Farbabweichung ausgeschlossen werden.
Es ist daher Aufgabe der Erfindung die Auswirkungen von dosierungsunabhängigen Störungen auf die Farbwiedergabe von Graumessfeldern zu reduzieren, um Fehlregelungen der Farbgebung zu verhindern.
Die vorliegende Aufgabe wird erfindungsgemäß durch die Patentansprüche 1, 7, 8 und 9 gelöst. Vorteilhafte Ausgestaltungen der Erfindung sind den Unteransprüchen, der Beschreibung und den Zeichnungen zu entnehmen.
Das erfindungsgemäße Verfahren dient der Regelung der Farbdosierung in einer Druckmaschine mit einem Rechner zum Vergleich von Farbmesswerten, welche auf einem Druckkontrollstreifen erfasst werden, mit Farbsollwerten und zur Steuerung der Farbdosierung in den Farbwerken einer Druckmaschine. Das Verfahren zeichnet sich dadurch aus, dass die Rasterung der zur Erfassung der Farbmesswerte genutzten Messfelder im Druckkontrollstreifen unabhängig von der Rasterung des Druckbildes ist. Somit können sich das Raster der Messfelder und das des Druckbildes unterscheiden, oder aber auch gleich sein.

In einer vorteilhaften Ausführung der Erfindung sind einige der Messfelder Graumessfelder, deren Rasterung fest vorgegeben ist. Dies stellt sich hinsichtlich einer Graufeldregelung besonders vorteilhaft dar, da für die Graumessfelder unabhängig vom Bildinhalt des Sujets störungsresistente Raster festgelegt werden können.
In einer besonders vorteilhaften Ausgestaltung der Erfindung reagiert das Raster der Messfelder des Druckkontrollstreifens nur sehr unempfindlich auf Störungseinflüsse im Druckprozess. Insbesondere reagiert das Raster unempfindlich auf Dublieren oder Schieben. Dies führt dazu, dass es bei dosierungsunabhängigen Störungen nicht zu Veränderungen der Farbwiedergabe der Messfelder kommt. Dies verhindert effektiv Fehlregelungen der Farbdosierung. Somit wird eine etwaige Plausibilitätsprüfung bei der Graufeldregelung wie in DE 102008045661 A1 beschrieben hinfällig, da nur noch dosierungsbedingte Farbveränderungen der Messfelder vorkommen können.
In einer weiteren besonders vorteilhaften Gestaltung der Erfindung ist das Raster der Messfelder ein frequenzmoduliertes Raster. Bei umfangreichen Untersuchungen im Rahmen der Erfindung hat sich herausgestellt, dass frequenzmodulierte Raster in hohem Maße unempfindlich auf Störungen wie z.B. Schieben und Dublieren reagieren.
Der erfindungsgemäße Bedruckstoff zeichnet sich dadurch aus, dass die Rasterung der Messfelder des Druckkontrollstreifens unabhängig von der Rasterung des Druckbildes ist. Somit kann die Rasterung des Druckbildes beispielsweise amplitudenmoduliert sein und das Störungsresistente Raster der Messfelder des Druckkontrollstreifens frequenzmoduliert.
Die Rasterung der erfindungsgemäßen Druckplatte ist dadurch gekennzeichnet, dass die Rasterung der Messfelder des Druckkontrollstreifens unabhängig von der Rasterung des Druckbildes ist. Somit eignet sie sich zur Herstellung beschriebenen Bedruckstoffe.
Die erfindungsgemäße Vorrichtung zur Erzeugung von einem Druckbild und einen Druckkontrollstreifen umfassenden gerasterten Bilddaten, welche in einer Druckmaschine auf einen Bedruckstoff aufgebracht werden zeichnet sich dadurch aus, dass die Vorrichtung dazu vorgesehen ist das Druckbild und die Messfelder des Druckkontrollstreifens unterschiedlich zu rastern. Dabei werden in einer Druckvorstufe die Bilddaten mit dem Kontrollstreifen zusammengebracht. Hierbei wird für die Messfelder des Druckkontrollstreifen ein störungsresistentes Raster festgelegt. Das Raster des Sujets hingegen ist vom Drucker frei wählbar. Anschließend werden das Druckbild und der Druckkontrollstreifen von einem Rasterimageprozessor wie vorgegeben gerastert. Für den Offsetdruck wird anschließend eine Druckplatte mit den erstellten Rasterdaten hergestellt. Im Falle eines Digitaldrucks werden die Daten direkt an eine Digitaldruckmaschine via Kommunikationsverbindung übersendet.

Die vorliegende Erfindung wird nachfolgen anhand zweier Figuren näher beschrieben und erläutert. Es zeigen:
- Fig. 1: eine Offsetdruckmaschine mit einem angeschlossenen Steuerungsrechner zur und
- Fig. 2: die Bestandteile eines erfindungsgemäß bedruckten Druckbogens.

Die Druckmaschine 1 in der Figur weist zwei Druckwerke 3, 4 auf, welche bogenförmige Bedruckstoffe 9 verarbeiten. Die bogenförmigen Bedruckstoffe 9 werden im Anleger 2 einem Anlegerstapel 8 entnommen und über eine Transporteinrichtung dem ersten Druckwerk 3 zugeführt. In den Druckwerken 3, 4 werden die bogenförmigen Bedruckstoffe 9 in den Druckspalten zwischen den Gummituchzylindern 13, 26 und den Gegendruckzylindern 10, 28 bedruckt. Zwischen den beiden Druckwerken 3, 4 werden die Bogen 9 mittels eines Transportzylinders 14 befördert. Im Anschluss an das zweite Druckwerk 4 werden die fertig bedruckten Bogen 9 an den Ausleger 6 übergeben und von diesem auf einem Auslegerstapel 7 abgelegt. Die Druckwerke 3, 4 weisen jeweils Farbwerke 16, 17 auf, welche die Druckfarbe auf die Druckplatten auf den Plattenzylindern 11, 12 aufbringen. Zur Steuerung der Eigenschaften der Druckfarbe sind in beiden Druckwerken 3, 4 Feuchtwerke 18, 19 vorgesehen, welche die Druckfarbe mit Feuchtmittel vermischen und so eine Beeinflussung der Eigenschaften der Druckfarbe ermöglichen. Von den Plattenzylindern 11, 12 wird die Druckfarbe auf die Gummituchzylinder 13, 26 übertragen. Am Ausgang des zweiten Druckwerks 4 ist zudem eine Inline-Messvornchtung 21 vorhanden, welche die produzierten bogenförmigen Bedruckstoffe 9 farblich vermessen kann. Bei der Inline-Messvorrichtung 21 kann es sich um einen RGB-Sensor, ein Densitometer oder eine andere Bildinspektionseinrichtung handeln. Die Inline-Messvorrichtung 21 muss die Farbe auf den Bogen 9 nicht absolut messen können, sie muss lediglich den relativen Färbungsverlauf auf den Bogen 9 erfassen können.

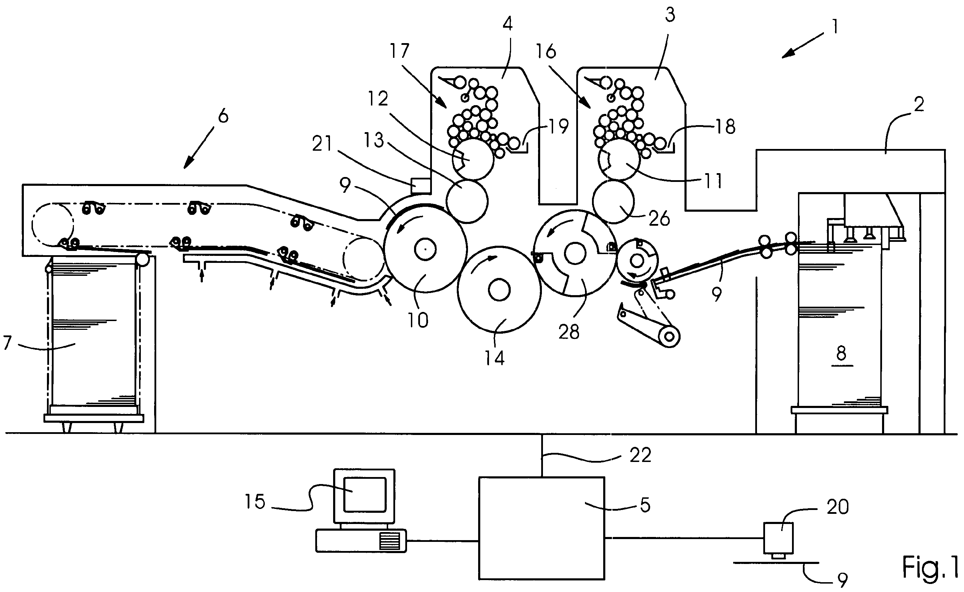

Die Inline-Messvorrichtung 21 ist in Figur 1 über eine Kommunikationsverbindung 22 mit dem Steuerungsrechner 5 der Druckmaschine 1 verbunden. Der Steuerungsrechner 5 der Druckmaschine 1 ist des Weiteren an einen Bildschirm 15 zur Eingabe und zur Anzeige der Betriebszustände der Druckmaschine 1 angeschlossen. Außerdem ist an den Steuerungsrechner 5 ein zweites Messgerät 20 angeschlossen, welches die Bedruckstoffe 9 absolut bezüglich der Farbe vermessen kann. Die Bedruckstoffe 9 können dem Auslegerstapel 7 entnommen werden und von dem Messgerät 20 farblich vermessen werden. Bei dem zweiten Farbmessgerät 20 handelt es sich um ein präzises Spektralphotometer, wie es z. B. in den Farbmesssystemen ImageControl und AxisControl der Heideiberger Druckmaschinen AG verwendet wird. Die mittels des zweiten Farbmessgeräts 20 gewonnenen Farbmesswerte können im Druckmaschinenrechner 5 mit den Farbmesswerten einer Druckvorlage insbesondere aus einer hier nicht gezeigten digitalen Druckvorstufe verglichen werden und die dabei ermittelten Abweichungen zur Steuerung der Farbwerke 16, 17 verwendet werden. Hierzu wird ein Soll-/Ist-Wert-Vergleich der mit dem Messgerät 20 ermittelten Farbmesswerte und der Druckvorlage vorgenommen und die Farbwerke 16, 17 der Druckmaschine 1 entsprechend angesteuert.
Die Farbwerke 16, 17 verfügen über Stellantriebe, mit denen Farbdosierelemente geöffnet und geschlossen werden können, um so den Farbauftrag regulieren zu können. Die Stellantriebe werden vom Steuerungsrechner 5 angesteuert, auf dem die Farbregelung mittels einheitlicher Regelgröße abläuft. Dies kann nur optimal funktionieren, wenn die vom Farbmessgerät 20 auf den Farbmessfeldern 24 ermittelten Ist-Werte frei von dosierungsunabhängigen Farbfehlern sind. Die Farbwiedergabe der Messfelder 24 kann beispielsweise durch Schieben oder Dublieren beeinträchtig werden. Ansonsten kann es zu Fehlregelungen bei der Farbdosierung kommen.
Um dies zu verhindern wird nun auf dem Kontrollstreifen 23 für die Graumessfelder 25 ein vom Raster des Druckbildes 26 unabhängiges, wenig störungsanfälliges Raster verwendet. So kann beispielsweise für das Druckbild 26 ein amplitudenmoduliertes Raster und für die Graumessfelder 25 ein frequenzmoduliertes Raster, welches weniger störanfällig ist, benutzt werden. Dadurch werden die Auswirkungen von Störungen auf den Ist-Wert der Farbe der Graumessfelder 25 vermindert und Fehlregelungen bei der Farbdosierung reduziert.

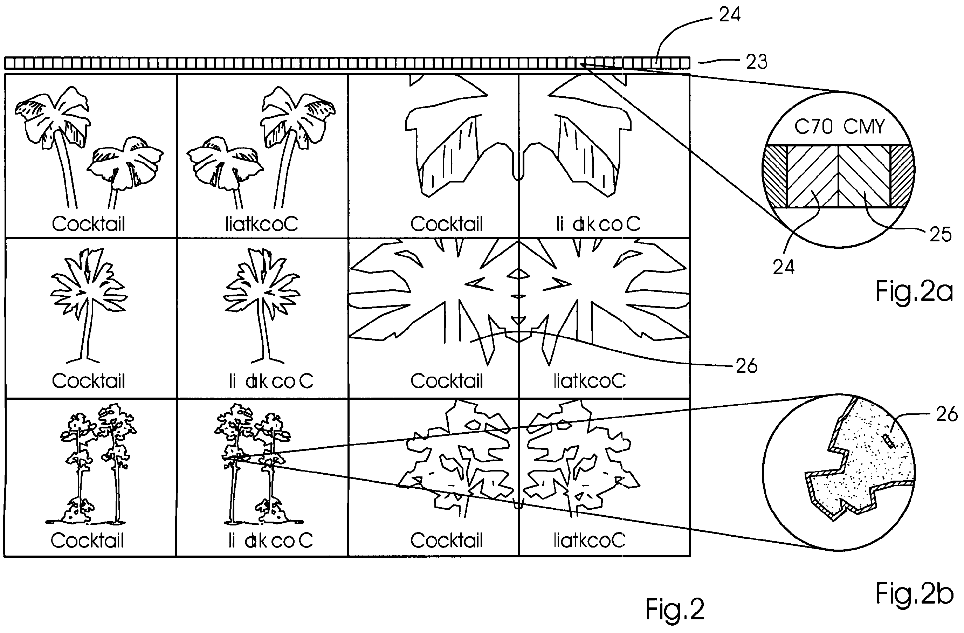

Figur 2 zeigt einen bedruckten Druckbogen 9. Am oberen Rand des Druckbogens 9 befindet sich der Druckkontrollstreifen 23, der sich aus einzelnen Messfeldern 24 zusammensetzt. Einen Teil dieser Messfelder 24 stellen Graumessfelder 25 dar. Unter dem Druckkontrollstreifen 23 befindet sich das Druckbild 26. In Fig. 2a werden ein Graumessfeld 25 und ein Messfeld 24 vergrößert dargestellt. Dabei ist zu erkennen, dass das Graumessfeld 25 eine vom Messfeld 24 unterschiedliche Rasterung aufweist. Fig. 2b zeigt einen vergrößerten Ausschnitt des Druckbildes 26. Es ist zu erkennen, dass die Rasterung des Druckbildes 26 sich von der Rasterung des Graumessfeldes 25 unterscheidet.

### Bezugszeichenliste

- 1: Druckmaschine
- 2: Anleger
- 3: Erstes Druckwerk
- 4: Zweites Druckwerk
- 5: Steuerungsrechner
- 6: Ausleger
- 7: Auslegerstapel
- 8: Anlegerstapel
- 9: Druckbogen
- 10, 28: Gegendruckzylinder
- 11, 12: Plattenzylinder
- 13, 26: Gummituchzylinder
- 14: Transportzylinder
- 15: Bildschirm
- 16, 17: Farbwerk
- 18, 19: Feuchtwerk
- 20: Messgerät
- 21: Inline-Messvorrichtung
- 22: Kommunikationsverbindung
- 23: Druckkontrollstreifen
- 24: Messfeld
- 25: Graumessfeld

## Patentansprüche

1. Verfahren zur Regelung der Farbdosierung in einer Druckmaschine (1) mit einem Rechner (5) zum Vergleich von Farbmesswerten, welche auf einem Druckkontrollstreifen (23) erfasst werden, mit Farbsollwerten und zur Steuerung der Farbdosierung in den Farbwerken der Druckmaschine (1),
**dadurch gekennzeichnet,**
**dass** die Rasterung der zur Erfassung der Farbmesswerte genutzten Messfelder (24) im Druckkontrollstreifen (23) unabhängig von der Rasterung des Druckbildes (26) ist.

2. Verfahren nach Anspruch 1,
**dadurch gekennzeichnet,**
**dass** die Messfelder (24) Graumessfelder (25) sind und dass die Rasterung der Graumessfelder (25) fest vorgegeben ist.

3. Verfahren nach einem der vorangehenden Ansprüche,
**dadurch gekennzeichnet,**
**dass** das Raster der Messfelder (24) des Druckkontrollstreifens (23) unempfindlich auf Störungseinflüsse im Druckprozess reagiert.

4. Verfahren nach Anspruch 3,
**dadurch gekennzeichnet,**
**dass** das Raster der Messfelder (24) des Druckkontrollstreifens (23) unempfindlich auf Dublieren oder Schieben reagiert.

5. Verfahren nach einem der vorangehenden Ansprüche,
**dadurch gekennzeichnet,**
**dass** unterschiedliche Messfelder (24) im Druckkontrollstreifen (23) unterschiedlich gerastert sind.

6. Verfahren nach Anspruch 4,
**dadurch gekennzeichnet,**
**dass** das unempfindlich auf Dublieren und Schieben reagierende Raster ein frequenzmoduliertes Raster ist.

7. Bedruckstoff (9), der
**dadurch gekennzeichnet**
**ist, dass** die Rasterung der Messfelder (24) des auf dem Bedruckstoff (9) aufgebrachten Druckkontrollstreifens (23) unabhängig von der Rasterung des auf dem Bedruckstoff (9) aufgebrachten Druckbildes (26) ist.

8. Druckplatte, die
**dadurch gekennzeichnet**
**ist, dass** die Rasterung der Messfelder (24) des Druckkontrollstreifens (23) unabhängig von der Rasterung des Druckbildes (26) ist.

9. Vorrichtung zur Erzeugung von einem Druckbild (26) und einen Druckkontrollstreifen (23) umfassenden gerasterten Bilddaten, welche in einer Druckmaschine (1) auf einen Bedruckstoff (9) aufgebracht werden,
**dadurch gekennzeichnet,**
**dass** die Vorrichtung dazu vorgesehen ist, das Druckbild (26) und die Messfelder (24) des Druckkontrollstreifens (23) unterschiedlich zu rastern.

## Claims

1. Method for controlling the metering of ink in a printing press (1) using a control unit (5) for comparing measured color values established on a print control strip (23) and target color values, and for controlling the metering of ink in the inking units of the printing press,
**characterized in**
**that** the screen of the measurement fields (24) used for taking the color measurements in the print control strip (23) is independent of the screen of the printed image (26).

2. Method according to Claim 1,
**characterized in**
**that** the measurement fields (24) are grey measurement fields (25) and the screen of the grey measurement fields (25) is invariably predefined.

3. Method according to any one of the preceding claims,
**characterized in**
**that** the screen of the measurement fields (24) of the print control strip (23) reacts insensitively to the influences of disturbance in the printing process.

4. Method according to claim 3,
**characterized in**
**that** the screen of the measurement fields (24) of the print control strip (23) reacts insensitively to doubling or slurring.

5. The method recited in any one of the preceding claims,
**characterized in**
**that** different measurement fields (24) in the print control strip (23) have different screens.

6. Method according to Claim 4,
**characterized in**
**that** the screen that is insensitive to doubling and slurring is a frequency-modulated screen.

7. Printing substrate (9)
**characterized in**
**that** the screen of the measurement fields (24) of the print control strip (23) applied to the printing substrate (9) is independent of the screen of the printed image (26) applied to the printing substrate (9).

8. Printing plate
**characterized in**
**that** the screen of the measurement fields (24) of the print control strip (23) is independent of the screen of the printed image (26).

9. Device for creating screened image data comprising a printed image (26) and a print control strip (23) that are applied to a printing substrate (9) in a printing press (1),
**characterized in**
**that** the device is provided to apply different screens to the printed image (26) and to the measurement fields (24) of the print control strip (23).

## Revendications

1. Procédé pour le réglage du dosage d'encre dans une machine d'impression (1) à l'aide d'un ordinateur (5) pour la comparaison de valeurs de mesure d'encre, qui sont saisies sur des bandes de contrôle d'impression, avec des valeurs d'encre de consigne et pour la commande du dosage d'encre dans les dispositifs d'encrage de la machine d'impression (1),
**caractérisé en ce**
**que** le tramage des champs de mesure utilisés pour la saisie des valeurs de mesure d'encrage (24) dans la bande de contrôle d'impression (23) est indépendant du tramage de la bande de l'image imprimée (26).

2. Procédé selon la revendication 1,
**caractérisé en ce**
**que** les champs de mesure (24) sont des champs de mesure de gris (25) et que le tramage des champs de mesure de gris (25) est prédéterminé.

3. Procédé selon l'une des revendications précédentes,
**caractérisé en ce**
**que** la trame des champs de mesure (24) de la bande de contrôle d'impression (23) réagit de manière insensible aux influences perturbatrices dans le processus d'impression.

4. Processus selon la revendication 3,
**caractérisé en ce**
**que** la trame des champs de mesure (24) de la bande de contrôle d'impression (23) réagit de manière insensible à la duplication ou la poussée.

5. Procédé selon l'une des revendications précédentes,
**caractérisé en ce**
**que** des champs de mesure différents (24) sont tramés différemment dans la bande de contrôle d'impression (23).

6. Processus selon la revendication 4,
**caractérisé en ce**
**que** la trame réagissant de manière insensible à la duplication et à la poussée est une trame à modulation de fréquence.

7. Support d'impression (9),
**caractérisé en ce**
**que** le tramage des champs de mesure (24) de la bande de contrôle d'impression (23) appliquée sur le support d'impression (9) est indépendant du tramage de l'image imprimée (26) appliquée sur le support d'impression (9).

8. Plaque d'impression,
**caractérisé en ce**
**que** le tramage des champs de mesure (24) de la bande de contrôle d'impression (23) est indépendant du tramage de l'image imprimée (26).

9. Dispositif pour la génération d'une image imprimée (20) et de données d'image tramées comprenant une bande de contrôle d'impression (23), données qui sont appliquées dans une machine d'impression (1) sur un support d'impression (9),
**caractérisé en ce**
**que** le dispositif est prévu pour tramer de manière différente l'image imprimée (26) et les champs de mesure (24) de la bande de contrôle d'impression (23).
